# EUROPEAN PATENT APPLICATION

(11) **EP 4 843 720 A2**
(43) Date of publication of application: **25.11.2026**
(21) Application number: 26207904.9
(22) Date of filing: 27.10.2022
(51) Int. Cl.: B25J 19/02

(54) **DEVICE, SYSTEM AND METHOD FOR HANDLING SAMPLE CONTAINERS**

(62) Document number(s) of the earlier application(s) in accordance with Art. 76 EPC: 22204205.3 / 4 361 638
(71) Applicant: Beckman Coulter, Inc., Brea, CA 92821 (US)
(72) Inventor: Liao, Xiaopeng, 81477 Munich (DE); Kaluzhenko, Serhii, 81377 Munich (DE)
(74) Representative: Maiwald GmbH

(57) **Abstract**

Summarizing the invention, a robotic handling device for handling sample containers, wherein the sample containers are or are to be arranged within a sample container rack, is provided. The robotic handling device comprises: a gripping element for gripping and releasing the sample containers; a drive mechanism configured to move the gripping element; and at least one sensing device connected to the gripping element, wherein the at least one sensing device is configured to collect sensing data related to the sample container rack, the sensing data comprising optical imaging data and ranging data; wherein the drive mechanism is configured to move the gripping element based on recognition data related to the sample container rack, the recognition data being obtained from the sensing data.

## Description

### Technical Field

The present invention relates to a device, a system and a method for detecting sample containers arranged within a sample container rack and for gripping sample containers from or releasing sample containers into a sample container rack.

### Background

Sample containers are used for holding samples to be tested, e.g. biological samples drawn from a human or animal patient, such as blood samples. Typically, the biological sample is collected at a first location, e.g. by a phlebotomist, and is then transported to a second location for testing/analysis, e.g. to a laboratory. Sample container racks (or "racks") are used for retaining one or more sample containers, e.g. tubes, in particular to ensure that, e.g. during transportation, the sample tubes are kept in a substantially upright orientation.

Typically, the sample container racks are automatically handled at the second location. For example, when a sample container rack is at an input station e.g. of an automated laboratory system, a robot may pick the sample containers from the rack according to a predefined conventional order, e.g. starting from the upper left corner of the rack. When a sample container rack is at an output station, e.g. of an automated laboratory system, a robot may simply assume that the rack is empty and fill it according to a predefined conventional order. In other words, the robot may handle each and every rack according to the same fixed rules dictating the movements of the robot.

### Summary

It is an object of the invention to improve the throughput and minimise the errors when handling sample containers containing samples to be analysed.

The achievement of this object in accordance with the invention is set out in the independent claims. Further developments of the invention are the subject matter of the dependent claims.

According to a first aspect of the invention, a robotic handling device for handling sample containers, wherein the sample containers are or are to be arranged within a sample container rack, is provided. The robotic handling device comprises:
- a gripping element for gripping and releasing the sample containers;
- a drive mechanism configured to move the gripping element; and
- at least one sensing device connected to the gripping element, wherein the at least one sensing device is configured to collect sensing data related to the sample container rack, the sensing data comprising optical imaging data and ranging data;
wherein the drive mechanism is configured to move the gripping element based on recognition data related to the sample container rack, the recognition data being obtained from the sensing data.

Generally, a sample container is configured to receive and hold a sample, such as a biological sample. Accordingly, the sample container may comprise a vessel comprising an opening for receiving the sample, wherein the opening may be configured to be releasably closed by a closing element, e.g. a cap. Thus, the sample container may comprise the vessel and, optionally, the cap releasably sealing the opening of the vessel.

In particular, the vessel may be a test tube having a substantially cylindrical shape, with the opening at one base and a closed end at the opposite base, the test tube having a given length given by the height of the cylinder. Exemplarily, the longitudinal section of the closed end may be U-shaped. The cap may comprise an engaging portion configured to engage with the vessel (e.g. to be pushed into the vessel to form a form fitting connection with at least portion of the vessel) and a protruding portion configured to protrude above the vessel. Exemplarily, the protruding portion may be a hollow cylinder, which has a ring-like cross section (also referred to as "top ring"). Alternatively, the cap may comprise a recess for receiving and forming a form fitting connection with a portion of the vessel.

The biological sample may be a sample of a bodily fluid of a human or animal subject. For example, the bodily fluid may be a physiological fluid, such as blood, saliva, urine, sweat, amniotic fluid, cerebrospinal fluid, ascites fluid, or the like. The biological sample may be put into a sample container after collection and it may be held (at least partially) in the container while being processed. In addition to the biological sample, the sample container may contain one or more substances such as reagents.

The sample container rack is configured to receive and to hold at least one sample container, in particular a plurality of sample containers. Accordingly, the rack may comprise a plurality of receptacles, wherein each receptacle is configured to hold a respective sample container, specifically in a substantially upright position. The receptacles may be recesses or openings.

The rack may comprise a plate comprising a plurality of openings, wherein each opening is configured to receive a respective sample container. Accordingly, a receptacle may comprise or consist of an opening. Exemplarily, an opening may be circular. The plurality of receptacles may be arranged in a grid formed by rows and columns. For instance, a rack may have 6 x 6 receptacles or 6 x 2 receptacles. In particular, the plate may be referred to as "upper plate" and the openings as "upper openings", since, when the rack is used in combination with the robotic handling device, e.g. when the rack is placed on a surface, the plate and its openings constitute the upper part of the rack, e.g. the plate is positioned above the remaining parts of the rack.

The rack may further comprise supporting elements configured to hold up the upper plate over a surface on which the rack is placed, in particular such that the upper plate is at a given height from the surface. This height may be such that an upper portion of the sample container may be arranged and held above of the rack (i.e. outside the rack). In other words, while held within the rack, the upper portion of the sample container protrudes out of the rack and may be grabbed by a gripping element. The upper portion of the sample container includes the opening, optionally sealed by the cap. In the example of the test tube, the upper portion may comprise 20% of the tube length, or 10% of the tube length, or 5% of the tube length. As explained also above, the "upper portion" of the sample container refers to the portion of the sample container located above the remaining portion of the sample container when the sample container is in use, e.g. manipulated by the robotic handling device or held within the rack.

For example, the supporting elements may be two lateral plates, e.g. perpendicular to the upper plate and located on two opposite sides of the upper plate. Thus, in one example, the rack may have the shape of a c-bracket. In another example, the rack may be substantially shaped like a cuboid and/or a box and further comprise a supporting plate parallel to the upper plate and connected to the lateral plates. Optionally, the rack may further comprise a plurality of plates intersecting to form prism-like cells, each cell corresponding to an aperture. In this case, a receptacle may further comprise lateral walls given by the cell.

The robotic handling device is configured to handle sample containers, in particular sample containers that are already arranged within a rack (i.e. held in the receptacles of the rack) as well as sample containers that are to be arranged within a rack, i.e. that are to be received by the rack, e.g. are to be inserted in respective receptacles of the rack. The robotic handling device is configured to move a sample container, i.e. change the position of the sample container, in the three-dimensional space and/or obtain information about the sample container. In particular, the three-dimensional space is the physical environment into which the robotic handling device, the rack and the sample containers are present or contained. Accordingly, a sample container is handled by the robotic handling device if its position is changed and/or information about it is obtained by the robotic handling device.

Specifically, the robotic handling device comprises a gripping element configured to grip a sample container, namely grasp the sample container such that it is held fast and is comovable with the gripping element, and to release the sample container, namely to free it from its grasp and allow a physical separation between the gripping element and the sample container. For instance, the gripping element may be configured to hold the upper portion of a sample container.

In particular, the gripping element may be configured to load and unload sample container racks, namely to put sample containers into a rack, e.g. into respective receptacles of the rack, and remove sample containers from a rack, e.g. from respective receptacles thereof, respectively. When loading, the gripping element may grip a sample container from a loading location, e.g. from a carrier, and release the sample container into the rack, while, when unloading, the gripping element may grip a sample container from the rack and release it at an unloading location, e.g. into a carrier . The loading/unloading location may also be e.g. a receptacle in the same rack or in another rack.

The gripping element may be configured to grip/release one sample container at the time. In other words, the robotic handling device may handle a plurality of different sample containers one at the time, e.g. in a temporal sequence. As mentioned, a sample container may be arranged within the rack or may have to be arranged within the rack.

Exemplarily, the gripping element may comprise a body and plurality of gripping fingers, i.e. at least two gripping fingers. The gripping fingers may be identical to each other. A gripping finger may be an elongated part projecting from the body, e.g. in the shape of a round bracket or an angle bracket. The gripping finger may, thus, have one extremity joined to the body (e.g. to an underside of the body) and another extremity that is free to come into contact with the sample container.

The gripping fingers may be configured to move relative to each other. In order to grip a sample container, the gripping fingers may be configured to collectively switch from a first position or open position, in which the linear separation between the free extremities (in particular between each pair of free extremities) is at its maximum, to a second position or closed position, in which the gripping fingers engage the sample container. In order to release a sample container, the gripping fingers may be configured to collectively switch from the second position to the first position. The second position may vary depending on the sample container. In the first and in the second position, the free extremities of the gripping fingers may lie along a first and a second circumference, respectively and may be angularly equidistant from each other, i.e., if there are n gripping fingers, the angular distance may be 360°/*n*. The diameter of the first circumference be greater than the diameter of the sample container (e.g. the tube) and the diameter of the second circumference may coincide with the diameter of the sample container (e.g. the tube) at the second position.

The robotic handling device further comprises a drive mechanism configured to move the gripping element. In particular, the drive mechanism may be configured to move the gripping element as a whole (the body together with the fingers) within the three-dimensional space. For instance, the drive mechanism may move the gripping element to a location where the sample container is located (e.g. a receptacle in the tube rack) to grip it and subsequently move the gripping element to an unloading location (e.g. a carrier) for the sample container to release it.

Exemplarily, if a Cartesian coordinate system having *x*, *y* and z axes is assigned to the three-dimensional space, the drive mechanism may be configured to translate the gripping element parallel to any of the axes, so that the movement of the gripping element may be a composite of translations parallel the three axes. For instance, the drive mechanism may comprise a robotic arm having at least two degrees of freedom.

In particular, in operation, the z axis may be a vertical axis, i.e. parallel to the direction of the Earth's gravitational pull, while the x and y axes may define a horizontal plane. Exemplarily, the relative positions of the robotic handling device and the sample container rack during operation may be such that the upper surface of the rack is parallel to the horizontal plane. For instance, the rack may be positioned atop a holding element, such as a drawer, and the surface of the holding element may be parallel to the horizontal plane.

The gripping fingers may extend substantially along the z axis, namely the extremity joined to the body may be above the free extremity, both in the first and second positions. In particular, in operation, the aforementioned first and the second circumference lie in a plane substantially orthogonal to the z axis and substantially parallel to the horizontal plane.

The drive mechanism and the gripping fingers may be controlled by a computing device, e.g. the first computing device or the second computing device discussed below.

The robotic handling device further comprises at least one sensing device connected to the gripping element. In particular, the at least one sensing device may be integral with the gripping element or may be attached to the gripping element. The at least one sensing device and the gripping element may be connected such as to form a substantially rigid body, so that a movement of the gripping element entails the same movement of the at least one sensing device. In particular, the at least one sensing device is co-moving with the gripping element (in particular with its body), meaning that, when the drive mechanism moves the gripping element, it moves the at least one sensing device along with it. In some examples the at least one sensing device is co-moving with the gripping element in the x-y plane and it may be fixed along the z axis.

In particular, the at least one sensing device may be located proximate to the body of the gripping element. As used herein, the term proximate may refer to a physical relationship that includes being at, on, and near. For instance, the at least one sensing device may be on the gripping element, specifically the body, in particular among the (joined extremities of the) plurality of gripping fingers, such as on the underside of the body. In this case, a distance between the at least one sensing device and the gripping fingers, in particular their free extremities, may be substantially only along the *z* axis. In this case, the spatial offset in the *x-y* plane between the at least one sensing device and the gripping element may be in the order of millimetres.

In another instance, the at least one sensing device may be near the gripping element, specifically the body, in particular fixedly connected to the body, e.g. by a bar. In this case the distance between the at least one sensing device and the gripping fingers, in particular their free extremities may be along at least one of the *x* and *y* axis, as well as along the *z* axis. For instance, the spatial offset in the *x-y* plane between the at least one sensing device and the gripping element may be between about 6 cm and about 12 cm, in particular between about 8 cm and about 10 cm. In some examples, the sensing device and the gripping element may be in contact with one another. In particular, the at least one sensing device may be calibrated, e.g. according to the calibration procedure described below.

The at least one sensing device is configured to collect sensing data related to the rack. The sensing data related to the rack may be related to one or more receptacles of the rack, wherein each receptacle may be empty or occupied by a sample container. If the rack hosts one or more sample containers, the sensing data related to the rack may relate to the one or more sample containers as well. In other words, the sensing data related to the rack may be related to one or more empty receptacles of the rack and/or to one or more sample containers arranged within (occupied receptacles of) the rack. In particular, the sensing data related to the rack may be related to a portion of the rack, e.g. a portion of the upper plate of the rack.

For instance, if the rack is empty, the sensing data may relate only to one or more of the empty receptacles of the rack. If the rack is partially occupied by sample containers, the sensing data may relate to one or more of the empty receptacles of the rack and/or to the one or more sample containers it holds. If the rack is full, the sensing data may relate only to the one or more sample containers it holds.

Exemplarily, the at least one sensing device may be associated to a sensing region, wherein the sensing region is a three-dimensional volume. In particular, the at least one sensing device may be configured to collect the sensing data related to the rack if at least a portion of the rack is positioned within the sensing region. The shape and dimensions of the sensing region as well as its position and orientation with respect to the at least one sensing device may depend on the technical specifications and/or the sensing properties of the at least one sensing device. The at least one sensing device may face the upper plate of the rack from above. In particular, the sensing region is co-moving with the at least one sensing device and, hence, with the gripping element. For example, the sensing region may be a finite portion of a solid angle, e.g. a spherical sector, with apex at a point of the sensing device.

The sensing properties of a sensing device may comprise one or more of the following: angular sensing range, linear sensing range, orientation sensing range and blind spot(s). The angular sensing range may refer to an angle describing the portion of the solid angle, within which the one or more sensing device is configured to collect the sensing data. The linear sensing range refers to a distance from the sensing device, wherein the sensing device can only collect sensing data for objects within this distance. A blind spot may be a volume for which the sensing device cannot collect sensing data, even if it is within the three sensing ranges. It should be noted that the sensing properties of a sensing device may vary, e.g. depending on environmental conditions such as illumination.

Furthermore, the at least one sensing device may be configured to collect the sensing data related to the rack if at least a portion of the rack is within the orientation sensing range, i.e. oriented in one or more sensing orientations. For example, the one or more sensing orientations may be unambiguously determined by three Euler angles. Exemplarily, in use, the sensing device may be configured to collect the sensing data when the rack is oriented such that an ideal plane containing the upper surface of the rack is substantially perpendicular to the vertical axis.

In case of a plurality of sensing devices, each sensing device may have its own sensing region and the intersection of these individual sensing regions may provide the overall sensing region for the plurality of sensing devices.

In one example, the at least one sensing device may be configured to collect sensing data related to the whole rack at once. In another example, the at least one sensing device may be configured to collect sensing data related only to one section of the rack at the time, wherein a section of the rack comprises a proper subset of the plurality of receptacles of the rack. For instance, a section of the rack may be the part of the rack within the sensing region. The proper subset may include one or more receptacles, which may or may not have sample containers arranged therein. For example, the proper subset may comprise a receptacle and its four first neighbours, namely the two adjacent neighbours in the same row and the two adjacent neighbours in the same column. For receptacles at the edges the first neighbours would be three and for receptacles at the corners the first neighbours would be two.

For instance, the at least one sensing device may be configured to collect the sensing data by scanning the rack, e.g. by changing its position over the rack so that the sensing region encompasses a different section of the rack at each position. In particular, the drive mechanism may be configured to move the gripping element (to which the at least one sensing device is rigidly connected) so that the at least one sensing device can collect the sensing data related to a plurality of sections of the rack. The plurality of sections are different from each other but may overlap with each other, i.e. may have one or more receptacles in common. The sensing data collected by the at least one sensing device cumulatively over time may or may not cover the whole rack.

Summarising, the at least one sensing device may collect sensing data related to the whole rack at once or step-wise, e.g. section by section. Alternatively, the at least one sensing device may collect sensing data related to one or more sections of the rack (but not the whole rack).

The sensing data collected by the at least one sensing device comprise optical imaging data and ranging data. In particular, the optical imaging data and the ranging data are related to the same object(s). In other words, for a given object, both optical imaging data and ranging data are collected by the at least one sensing device.

The optical imaging data may comprise one or more digital images (e.g. colour images, grayscale images, black-white images) of the rack, including potential sample containers. For example, the optical imaging data may comprise one or more raster images. A raster image comprises a set of pixel, e.g. a two-dimensional array of pixels. Each pixel may be associated with a value representing the grey level of the pixel. Alternatively, each pixel of an image may be associated with a plurality, e.g. three or four, values representing a colour in a colour model, e.g. the RGB colour model, the RYB colour model, the CMY colour model, the CMYK colour model, and the like. In particular, each digital image of the one or more digital images may be a corresponding frame of a video. If this is the case, the optical imaging data may comprise a portion of the video.

The ranging data may comprise one or more distance measurements of the distance between the at least one sensing device and any point of the rack (including potential sample containers). For instance, the distance measurements may be stored in the form of one or more distance heatmaps. For example, the ranging data may comprise one or more sets of pixels, e.g. each set of pixel corresponding to a distance heatmap, wherein each pixel may be associated with a value for a distance measurement.

Exemplarily, the at least one sensing device may comprise an optical camera device (i.e. a camera device that uses visible or infrared light to create an image and/or a video) and a rangefinder device, e.g. a LIDAR device. Exemplarily, the optical camera device is a camera and/or a video camera. The optical camera device may be configured to collect the optical imaging data and the rangefinder device may be configured to collect the ranging data. In particular, the optical camera device may be associated with a first field of view and the rangefinder may be associated with a second field of view. In this case, the sensing region may be the volume given by the intersection between the first field of view and the second field of view.

In one instance, the at least one sensing device may comprise one sensing device comprising the optical camera device and the rangefinder device. In other words, the optical camera device and the rangefinder device may be integrated in a single component, e.g. placed within one enclosure. In another instance, the at least one sensing device may comprise two sensing devices, a first sensing device comprising the optical camera device and a second sensing device comprising the rangefinder device, wherein the first and second sensing devices may be physically separated from each other.

In another example, the at least one sensing device may comprise a plurality of optical camera devices at different positions (thus, having different perspectives), wherein each optical camera device may be configured to collect the optical imaging data and the plurality of different perspectives in the optical imaging data may provide the ranging data. Exemplarily, the at least one sensing device may comprise a stereo camera.

The sensing data are used to guide the movement of the gripping element. More specifically, the drive mechanism is configured to move the gripping element based on recognition data obtained from the sensing data. In particular, the recognition data relate to the rack (i.e. to one or more empty receptacles and/or to one or more sample containers).

Generally, obtaining the recognition data may comprise processing the sensing data, e.g. by using object recognition techniques. In particular, processing the sensing data may include combining the optical imaging data with the ranging data, e.g. when performing object recognition. Furthermore, additional datasets may be combined with the sensing data in order to obtain the recognition data, as discussed below.

As mentioned, the at least one sensing device may be configured to collect sensing data related to one section of the rack at the time. In this case, for instance, the recognition data may be obtained from the sensing data for each section or may be obtained from the sensing data related to a plurality of sections, i.e. after the at least one sensing device has accumulated sensing data related to different sections.

The recognition data may be obtained from the sensing data by a first computing device comprising at least one processor and a memory. The first computing device may receive the sensing data as input and provide the recognition data as output. In a particular example, the first computing device may be comprised in the robotic handling device. In another example, the first computing device may not be comprised in the robotic handling device and may be in data communication with the robotic handling device, e.g. via a network such as an intranet or the Internet.

The drive mechanism is configured to move the gripping element based on the recognition data. In particular, the recognition data determine how the gripping element should be moved, in particular to which location the gripping element should be moved, e.g. for gripping a sample container from the rack or releasing a sample container into the rack.

Exemplarily, the drive mechanism may be configured to move the gripping element according to instructions generated based on the recognition data. The instructions may be further based on one or more rules for handling the sample containers, such as optimisation rules for the overall route of the gripping element and prioritisation rules about which sample containers should be handled first (e.g. due to the urgency of the analysis).

The instructions may comprise actual machine commands for the drive mechanism. The instructions may be generated by a computing device (which may be the first computing device or a second computing device) in communication with the drive mechanism.

The gathering of both optical imaging data and ranging data to acquire information about the rack leads to an accurate and precise detection of the actual, case-by-case context in which the robotic handling device operates. This enables the robotic handling device to handle the sample containers in a fine-tuned manner, thereby improving the throughput and minimising the occurrence of mistakes.

Exemplarily, as mentioned, the at least one sensing device may comprise an optical camera device and a rangefinder device, e.g. a LIDAR device. The use of an optical camera device and a rangefinder device to gather optical imaging data and ranging data, respectively, allows for simplifying the manufacturing of the device, e.g. with respect to an implementation in which the ranging data are gathered by a plurality of cameras via computer stereo vision. More specifically, even in case of two separate devices, small errors in positioning the two sensing devices (i.e., in this case, the optical camera device and the rangefinder device) with respect to one another do not affect substantially the estimates of the distances comprised in the ranging data.

In a particular example, the recognition data may comprise receptacle occupancy information, the receptacle occupancy information being indicative of whether at least a receptacle of the sample container rack is empty or occupied by a sample container. In other words, the occupancy information indicates whether there is any sample container in the receptacle or whether there is no sample container in the receptacle (i.e. the receptacle is empty). In line with the explanations above, the receptacle occupancy information may relate only to a proper subset of the plurality of receptacles of the rack or may relate to each receptacle of the plurality of receptacles.

In particular, a sample container occupying a receptacle of the rack is handled by the robotic handling device, as it is gripped/released by the gripping element and/or the at least one sensing device collects sensing data related to said sample container.

It should be noted that the fact that the recognition data, and in particular the receptacle occupancy information, are obtained from sensing data comprising both optical imaging data and ranging data makes the receptacle occupancy information more accurate. For example, from the optical imaging data (e.g. a digital image) alone a receptacle may look empty even if it is occupied, for instance because the occupying sample container has a dark cap and/or because the ambient lighting conditions are suboptimal (e.g. dark environment). The use of ranging data in addition to the optical imaging data can rectify possible erroneous occupancy detections that would occur if only one set of data were used.

Since the receptacle occupancy information is part of the recognition data, the drive mechanism may be configured to move the gripping element based on the receptacle occupancy information. In an illustrative example, the rack shall be unloaded by using the robot handling device.

In some cases, as mentioned above, the sensing data may relate only to a section of the rack. In particular, the gripping element may be positioned with respect to the rack such that the sensing data gathered by the at least one sensing device are related to a first section of the rack. Accordingly, the recognition data may comprise information indicative of whether the receptacles in the first section of the rack are occupied or empty, e.g. which receptacles in the first section are occupied and which receptacles are empty. If at least one receptacle in the first section is occupied by a sample container, the drive mechanism may be instructed to move the gripping element towards said receptacle to grip the sample container in the receptacle. If all the receptacles in the first section are empty, the drive mechanism may be instructed to move the gripping element to a second position with respect to the rack such that the sensing data gathered by the at least one sensing device are related to a second section of the rack.

In other cases, as mentioned above, the sensing data may relate to the whole rack. Accordingly, the recognition data may comprise information indicative of which receptacles of the rack are occupied and which receptacles of the rack are empty. The drive mechanism may be instructed to move the gripping element only to the occupied receptacles of the rack, one at the time, to grip the respective sample containers.

Hence, in all cases, the gripping element can be directed to occupied receptacles dynamically, i.e. based on the actual arrangement of the sample containers within the racks, without having to rely on predefined movement rules that lead to suboptimal, time- and energy-consuming movements of the gripping element. This also enables an operator or a machine loading the rack, e.g. at an intake station of the laboratory or at a doctor's office, to place the sample containers in the rack freely without having to follow specific rules.

Therefore, the throughput of the robotic handling device can be improved efficiently, in particular while also simplifying a preparatory stage of the sample containers before they are handled by the robotic handling device.

In a particular example, in case the receptacle is occupied by the sample container, the recognition data further comprise container position information indicative of a position of the sample container. Additionally or alternatively, in case the receptacle is empty, the recognition data may further comprise receptacle position information indicative of a position of the empty receptacle.

In particular, the receptacle occupancy information may be indicative of whether two or more receptacles of the sample container rack are empty or occupied, the receptacles of a fraction of the two or more receptacles being empty and each receptacle of another fraction of the two or more receptacles being occupied by a respective container. In this case, the recognition data may comprise both container position information and receptacle position information, or only container position information or only receptacle position information.

The container position information may be indicative of the respective positions of a plurality of sample containers in the rack, i.e. of the position of each sample container in the rack. The receptacle position information may be indicative of the respective positions of a plurality of empty receptacles of the rack, i.e. of the position of each empty receptacle of the rack.

The position of the sample container and/or of the empty receptacle may be the position within the three-dimensional space. Accordingly, the position of the sample container, in particular of a top part of the sample container (e.g. of the centre of said part), may be given by three numerical values (expressed e.g. in cm or in mm). The top part of a sample container may be the opening of the sample container or the upper surface of the cap. Similarly, the position of the empty receptacle, in particular of its upper opening (e.g. of the centre of the upper opening), may be given by three numerical values (expressed e.g. in cm or in mm). For instance, the position of a sample container occupying a receptacle of the rack is the position of said receptacle.

Exemplarily, the recognition data may comprise information indicative of the position of an empty receptacle of the rack and/or the position of a sample container within a receptacle of the rack. In particular, the position of an object (e.g. the empty receptacle or a sample container) may be specified by a triplet of values which specify the position of the object in a reference frame and/or with respect to the at least one sensing device or the gripping element. In particular, the triplet of values may be cartesian, spherical or cylindrical coordinates.

The position may be an absolute position, e.g. the numerical values are coordinates in the coordinate system with respect to the origin of the coordinate system, or may be a relative position with respect to another element, such as the gripping element or a reference point on the rack.

The relative position of a given object (the sample container or the empty receptacle) with respect to another element may be given by three numerical values indicating the components of the separation between the given object and the other element along the three axes of the coordinate system. Accordingly, information specifying the relative position of the given object with respect to another element specifies the distance between the given object and the other element. Using the relative position of the given object with respect to another element together with the absolute position of the other element, the absolute position of the given object can be obtained.

The drive mechanism may be configured to move the gripping element based on the container position information. Exemplarily, the drive mechanism may move the gripping element (e.g. from a starting position such as an idle position or a previous working position) to the position of the sample container in order to grip the sample container from the occupied receptacle.

The drive mechanism may be configured to move the gripping element based on the receptacle position information. Exemplarily, the drive mechanism may move the gripping element (e.g. from a starting position such as an idle position or a previous working position) to the position of the empty receptacle in order to release a sample container in the empty receptacle.

Accordingly, the drive mechanism may move the gripping element directly to the position of interest depending on the context (e.g. loading or unloading), wherein the position of interest is accurately determined thanks to the combination of optical imaging data and ranging data, thereby avoiding pointless movements of the gripping element. Therefore, the throughput of the robotic handling device can be improved.

In a particular example, in case the receptacle is occupied by the sample container, the recognition data may further comprise information indicative of one or more features of the sample container, besides the container position information. The features of the container may include its shape, its type, one or more of its dimensions (such as height or diameter), the presence of liquid inside (in case the sample container is uncapped).

The drive mechanism may be configured to move the gripping element based on the information indicative of one or more features of the sample container and the container position information. Exemplarily, the drive mechanism may move the gripping element to the position of the sample container and/or a speed of the gripping element may be adjusted when lifting the sample container based on whether it contains liquid.

Alternatively or additionally, the gripping element may be instructed, e.g. by the second computing device, to handle the sample container based on the information indicative of one or more features of the sample container. For instance, the strength with which the gripping element is instructed to grip the sample container may depend on the one or more features of the sample container, e.g. of the sample container type. For instance, the position of the gripping element at which the gripping element is instructed to grip the sample container depends on the one or more features of the sample container, e.g. the container type and/or one or more dimensions of the sample container.

In a particular example, in case the receptacle is occupied by the sample container, the recognition data may further comprise closing information, the closing information being indicative of whether the sample container is closed by a cap or not. In other words, for a given sample container held in the rack, the closing information may indicate whether the given sample container comprises just a vessel or both the vessel and a cap.

The presence of the cap can be more accurately detected by obtaining the recognition data from both optical imaging data and ranging data. In one example, the rack may have been processed at a decapping station prior to being handled by the robotic handling device. Accordingly, thanks to the at least one sensing device, a decapping quality check may be performed, i.e. it may be ensured that all caps were successfully removed at the decapping station.

Thus, for example, the sample containers in the rack may be expected to be decapped. If, according to the closing information, a sample container is not decapped as expected, the drive mechanism may move the gripping element away from said sample container and on to a decapped sample container. In some examples, additionally, an error may be reported, indicating the non-decapped sample container, and said sample container may be routed to a questionable-samples region for manual inspection by an operator. The same would apply *mutatis mutandis* for a case in which the sample containers in the rack are expected to be capped.

Furthermore, in a particular example, in case the sample container is closed by a cap, the recognition data may further comprise cap information indicative of one or more features of the cap. The features of the cap may include its type, its shape, one or more of its dimensions (e.g. cap diameter, cap height) and/or its colour. In particular, the features may relate to the protruding portion of the cap. At least some features of the cap can be more accurately detected by obtaining the recognition data from both optical imaging data and ranging data. The features of the cap, e.g. the colour thereof, may indicate whether the tube contains a STAT sample or not.

The drive mechanism may be configured to move the gripping element based on the cap information. In an example, the receptacle occupancy information may indicate that a first receptacle is occupied by a first sample container and that a second receptacle is occupied by a second sample container. According to the cap information, the first sample container may have a cap indicating (e.g. via the colour) an ordinary sample inside while the second sample container may have a cap indicating a priority sample inside (e.g. a STAT sample). The drive mechanism may move the gripping element directly towards the second sample container, because its processing is more urgent. Accordingly, the handling of sample containers may be improved in terms of turnaround.

As mentioned above, the first computing device may be configured to obtain the recognition data from the sensing data, and, in a particular example, the first computing device may be comprised in the robotic handling device. Accordingly, the at least one sensing device may be configured to provide the sensing data to the first computing device, and, correspondingly, the first computing device may be configured to access the sensing data.

In the present disclosure, "accessing, by a device (e.g. the first computing device), data" may comprise receiving the data from another device (e.g. the sensing device) or retrieving the data from a remote data storage (e.g. a cloud storage or the like). In particular, said computing device may retrieve data in response to a notification sent by another computing device. Correspondingly, in the present disclosure, "providing, by a device, data" may comprise sending the data to another device, transferring the data to a remote data storage accessible by another device, or making the data available to another device, e.g. by sending a link to the data to the other device.

Exemplarily, the at least one sensing device and the first computing device may be in data communication. Alternatively, the at least one sensing device may comprise the first computing device.

The first computing device is configured to generate the recognition data, i.e. to create the recognition data, using the sensing data. In some examples, the first computing device may generate the recognition data by using the sensing data and one or more other datasets.

Exemplarily, the first computing device may be configured to obtain the recognition data in two stages. In a first stage, the first computing device may use the sensing data to obtain intermediate data (which may already comprise part of the recognition data) and, in a second stage, the first computing device may use the intermediate data in combination with one or more other datasets to obtain the (rest of the) recognition data.

In the first stage, the first computing device may use object recognition techniques. In particular, the intermediate data may comprise the receptacle occupancy information and, optionally, the closing information and the cap information. Alternatively or additionally, the intermediate data may comprise two-dimensional position information concerning a sample container and/or an empty receptacle. The two-dimensional position information may be indicative of a position of a representation of an object (i.e. the sample container or the empty receptacle) in the digital image, e.g. specified with respect a system of reference of the digital image, which is two-dimensional and bound by the edges of the digital image. Thus, obtaining the recognition data may comprise mapping the two-dimensional positions to the three-dimensional positions in the physical environment. In the second stage, the first computing device may use one or more other datasets to perform this mapping, as explained below.

Exemplarily, the first computing device may be configured to use a machine learning algorithm (hereinafter also referred to as: "MLA") to obtain the recognition data from the sensing data. In particular, the MLA is trained to recognise the presence of and, if applicable, to estimate the position of the sample containers in the rack and/or of the empty receptacles of the rack. For example, If the sensing data comprise a digital image, the MLA is trained to recognise the presence of and, if applicable, to estimate the position in the digital image of the sample containers and/or of the empty receptacles. In particular, the first computing device may use the machine learning algorithm in the first stage. Exemplarily, the MLA is a neural network, e.g. a trained neural network. The neural network may be a feed forward convolutional neural network.

In particular, the MLA is configured to generate an output by processing an input. The input of the machine learning algorithm may comprise the optical imaging data and the ranging data. For instance, a digital image and a heatmap may be merged to obtain an input frame, wherein the input frame comprises a plurality of pixels and each pixel may be associated with value(s) for one or more component intensities as well as a value for a distance measurement. Exemplarily, the input frames may be RGBD frames, in which each pixel is associated with values for red, green, blue and distance. The input frame may be the input of the machine learning algorithm.

In particular, the output of the MLA may comprise the recognition data. If the sensing data comprises a digital image, the output of the machine learning algorithm may comprise information indicative of one or more positions of the digital image at which objects are recognised. Accordingly, the latter information codifies the two-dimensional position and, optionally, the dimensions of the recognised sample container or its cap. The output of the MLA may comprise information indicative of the type of objects recognised by the MLA.

For example, the latter information may comprise, for each recognised object, information specifying the object type, i.e. whether the recognised object is empty receptacle, uncapped sample container, capped sample container with a given cap type. Accordingly, the information indicative of the type of objects recognised by the MLA may codify the receptacle occupancy information, as well as the closing information and the cap information. The output of the MLA may comprise information indicative of the confidence level of the recognition. In particular, the latter information may comprise, for each recognised object, information specifying the confidence level of the recognition of said recognised object.

For example, the output of the MLA may comprise an output frame. Exemplarily the output frame comprises one or more pixel regions of the digital image, each region comprising a plurality of pixels. At least some pixel regions may be associated with a plurality of values encoding the intermediate data obtained by the machine learning algorithm from the input frame (i.e. the sensing data). For instance, the output frame may comprise pixel regions in which an object has been recognised and/or pixel regions in which no object has been recognised. The latter pixel regions may have no values associated with them, while the former pixel regions may have a set of values associated therewith.

The set of values may comprise one or more values uniquely specifying the pixels region and the position of the pixel region in the digital image. For instance, if the pixel region is circular, the one or more values consist of the position in the image of the pixel at the centre of the region and of the value of the radius of the region. For example, if the pixel region is rectangular, the one or more values consist of the position in the image of the pixel at the centre of the region, the length of the longer sides of the rectangle and the length of the shorter sides of the rectangle. In particular, if the region is a square, the one or more values consist of the position in the image of the pixel at the centre of the region, and the length of the side of the square. The set of values associated with a pixel region may further comprise one value indicating the confidence level of the recognition and one value indicating the type of object identified.

The position of the pixel regions in the digital image may be mapped to the three-dimensional position of the object recognised in said regions within the physical environment by the first computing device in the second stage. In order to perform the mapping, the first computing device may combine the intermediate data with one or more other sets of data, including one or more of the following: the ranging data, rack data, rack position data, gripper position data.

In particular, the mapping of the position of the pixel regions in the digital image to the three-dimensional position of the object recognised in said regions may be carried out by using a mapping procedure. Exemplarily, the mapping may be carried out by using the pinhole camera model. This model provides a mathematical relationship between the coordinates of a point in the three-dimensional world and the coordinates of the representation of said point in the image. Geometric distortions may be included in the pinhole camera model, e.g. as disclosed in the article "A Flexible New Technique for Camera Calibration", authored by Zhengyou Zhang and published in IEEE Transactions on Pattern Analysis and Machine Intelligence (Volume: 22, Issue: 11, November 2000, Pages: 1330 - 1334). This article is hereby incorporated by reference.

In particular, if the sensing device comprises a camera (in particular an optical camera), the mapping may comprise estimating the three-dimensional coordinates in the camera frame, (*x*₁ *x*₂ *x*₃)*,* of the object depicted at the centre of the pixel region. The coordinate *x*₃ may be estimated by using the ranging data collected by the sensing device and distance information and the orientation (i.e. the angle) of the optical axis of the camera with respect to the vertical axis. Alternatively or additionally, the coordinate *x*₃ may be estimated by using the position of the upper surface of the rack with respect to the camera. The coordinates *x*₁ and *x*₂ may be estimated by using the following formulae: $\left\{\begin{matrix}{a}_{1} = \frac{α}{{x}_{3}} {x}_{1} + \frac{γ}{{x}_{3}} {x}_{2} + {u}_{0} \\ {a}_{2} = \frac{β}{{x}_{3}} {x}_{2} + {v}_{0}\end{matrix}\right. ,$ wherein (*a*₁ *a*₂) are the coordinates of the centre of the pixel region in the image, (*u*₀ *v*₀) the coordinates of the principal point, *α* and *β* scale factors in the axes of the reference frame of the image, and y is the parameter describing the skewness of the axes of the reference frame of the image. The parameters *u*₀, *v*₀, *α, β, γ* may be estimated e.g. by using the calibration procedure disclosed in the article "A Flexible New Technique for Camera Calibration", authored by Zhengyou Zhang.

Moreover, the mapping may comprise estimating the three-dimensional position of the of the object depicted at the centre of the pixel region by computing the three-dimensional coordinates, (*y*₁ *y*₂ *y*₃) in the world reference frame, e.g. in the frame used by the gripper to locate points in the three-dimensional space. The coordinates (*y*₁ *y*₂ *y*₃) and (*x*₁ *x*₂ *x*₃) are related to one another by using the rotations and the translations transforming the world reference frame and the camera reference frame into one another. The coordinates (*y*₁ *y*₂ *y*₃) may be used to generate instructions for moving the gripping element at the position described in the world reference frame by the coordinates (*y*₁ *y*₂ *y*₃)*.*

Summarising, the mapping procedure may comprise transforming the coordinates of the representation of a point in an image into three-dimensional coordinates of a camera-related reference system and transforming the latter into three-dimensional coordinates of reference system related to the drive mechanism and the gripper.

In a particular example, the first computing device may be configured to obtain the recognition data by using rack data, the rack data comprising information indicative of the position of each receptacle of the rack in the rack, e.g. with respect to a reference point of the rack, and rack position data, the rack position data comprising information indicative of the position and/or orientation of the sample container rack.

The rack data may further comprise information indicative of a rack type and/or of one or more dimensions of the sample container rack. A rack type may indicate the capacity of the rack (e.g. the number of rows and columns in which the receptacles are arranged in the rack).

The rack data may be accessed by the first computing device e.g. from another device from a remote data storage. In one example, the rack position data may be accessed by the first computing device e.g. from another device from a remote data storage.

In another example, the rack position data may be obtained by using the sensing data. In particular, the rack position data may be obtained by using the machine learning algorithm to recognise in the image one or more reference points on the rack and by using the pinhole camera model described above to map the position of said one or more reference points in the three-dimensional space. The position of the reference points allows for determining the position and the orientation of the rack in the three-dimensional space.

By using the position and orientation of the rack in the three-dimensional space and the information indicative of the position of each receptacle of the rack, it is possible to estimate the position in the three-dimensional space of each receptacle of the rack. The three-dimensional position of the receptacles (as obtained by using the position and orientation of the rack in the three-dimensional space and the information indicative of the position of each receptacle of the rack) may be compared with the three-dimensional position of the objects recognised in the image obtained by using the mapping procedure described above.

This comparison allows for providing a further estimate of the position of the objects recognised in the image. In particular, the further estimate of each object of the objects is the three-dimensional position of the receptacle which is closest to said each object. In this case, if the gripping element is to move towards one object of the objects recognised in the image, the gripping element is instructed to move towards the receptacle which is closest to said object. This way, the accuracy of the estimate of the three-dimensional position of the objects recognised in the image is improved.

Exemplarily, the rack data and the rack position data may also be used to perform a "sanity check" on the recognition data. If a recognized object is located at a three-dimensional position that is outside of the volume of the rack, said recognized object should be discarded, as it cannot actually be an empty receptacle or a sample container in a receptacle.

In a particular example, the robotic handling device may be configured to read the rack data, the rack data being comprised in an indicium of the sample container rack. For instance, the indicium may be an RFID tag or may be an optical indicium, such as an element having a specific colour and/or shape. In the former case, the robotic handling device may comprise an RFID reader. In the latter case, the optical indicium may be part of the optical imaging data and the rack data may be read from it by recognising the optical indicium (e.g. by the first computing device).

In cases in which there is a spatial offset in the *x-y* plane between the gripping element and the at least one sensing device, the first computing device may be further configured to obtain the recognition data by using gripper position data, the gripper position data comprising information indicative of a position of the gripper element. The position of the gripping element may be given by the drive mechanism.

In particular, the spatial offset may be determined by using a reference point having known three-dimensional position. The at least one sensing device (e.g. the optical camera device) may be brought vertically on top of the reference point, so that the *x-y* position of the at least one sensing device is also known, since it coincides with that of the reference point. The spatial offset is then given by the different between the *x-y* position of the gripping element and the *x-y* position of the at least one sensing device.

A second aspect of the invention relates to the first computing device, which is configured to obtain the recognition data from the sensing data, as discussed above. In particular, the (first) computing device may be configured to access sensing data relative to a sample container rack, the sensing data comprising optical imaging data and ranging data; and to obtain by using the sensing data, recognition data relative to the sample container rack.

A corresponding computer-implemented method may comprise: accessing, by a first computing device, sensing data relative to a sample container rack, the sensing data comprising optical imaging data and ranging data; and obtaining, by the first computing device by using the sensing data, recognition data relative to the sample container rack. In a particular example, obtaining the recognition data may be carried out by using a machine learning algorithm, as described above.

A third aspect of the present invention relates to a system. The system comprises the robotic handling device described heretofore and a second computing device, wherein: the first computing device is configured to provide the recognition data to the second computing device;
the second computing device is configured to generate, based on the recognition data, instructions for moving the gripping element; and
the drive mechanism is configured to move the gripping element according to the instructions.

The first computing device and the second computing device may be in data communication with each other, e.g. via a network such as an intranet or the Internet or via a bus. The first computing device may be comprised in the robotic handling device and the second computing device may be external to the robotic handling device.

The first computing device may send the recognition data to the second computing device which may use them to generate instructions for moving the gripping element, i.e. instructions for controlling the drive mechanism. The instructions may comprise actual machine commands for the drive mechanism.

The robotic handling device may be configured to receive the instructions from the second computing device. In one example, the first computing device may receive the instructions and use the instructions to control the drive mechanism. In another example, the drive mechanism may receive the instructions and be controlled directly by the second computing device, wherein the first computing device may act as an edge device.

The drive mechanism moves the gripping element following the instructions, e.g. toward the rack to pick or release a sample container.

A fourth aspect of the present invention relates to a method for handling sample containers, wherein the sample containers are or are to be arranged within a sample container rack. The method comprises:
- collecting, by at least one sensing device connected to a gripping element, sensing data related to the sample container rack, the sensing data comprising optical imaging data and ranging data;
- moving, by a drive mechanism configured to move the gripping element, the gripping element based on recognition data related to the sample container rack, wherein the recognition data are obtained from the sensing data.

The method may further comprise obtaining, by a first computing device, the recognition data from the sensing data, optionally by using a machine learning algorithm.

Prior to collecting the sensing data, the method may further comprise performing a calibration of the at least one sensing device. In particular, the calibration may comprise carrying out a calibration procedure. For example, if the at least one sensing device comprises a camera, the method further comprises calibrating the camera. In particular the camera may be calibrated by using a conventional calibration procedure, e.g. the calibration procedure disclosed in the article "A Flexible New Technique for Camera Calibration", authored by Zhengyou Zhang.

Prior to collecting the sensing data, the method may further comprise positioning, by the drive mechanism, the gripping element and the sample container rack with respect to one another such that the at least a section of the rack is located within the sensing region.

Exemplarily, the method according to the fourth aspect of the present invention may be a method for unloading the rack. For instance, the sensing data may be related to a section of the rack around a first position in the x-y plane. In particular, the recognition data may comprise receptacle occupancy information indicative of whether a receptacle in the section of the rack is empty or occupied by a sample container, and receptacle position information or container position information, respectively. For instance, the method may comprise:
- moving, by the drive mechanism, the gripping element so that the at least one sensing device is moved to the first position above the rack;
- obtaining, by the first computing device, recognition data;
if the receptacle is empty:
- moving, by the drive mechanism, the gripping element to a second position different from the first position;
- and, if the receptacle is occupied by the sample container,
- moving, by the drive mechanism, the gripping element to the position of the sample container;
- unloading the sample container from the rack by gripping, by the gripping element, the sample container.

In a particular example, the method according to the fourth aspect of the present invention may be a method for loading the rack. For instance, the sensing data may be related to a section of the rack around a first position in the x-y plane. In particular, the recognition data may comprise receptacle occupancy information indicative of whether a receptacle in the section of the rack is empty or occupied, and receptacle position information. For instance, the method may comprise:
- moving, by the drive mechanism, the gripping element so that the at least one sensing device is moved to the first position above the rack, wherein the gripping element holds a sample container;
- obtaining, by the first computing device, recognition data;
if the receptacle is occupied:
- moving, by the drive mechanism, the gripping element to a second position different from the first position;
and, if the receptacle is empty:
- moving, by the drive mechanism, the gripping element along the z-axis to the position of the empty receptacle;
- loading the sample container into the rack by releasing, by the gripping element, a sample container in the empty receptacle.

In particular, the method my comprise gripping, by the gripping element, the sample container e.g. before moving the gripping element to the first position above rack.

### Brief Description of the Drawings

Details of exemplary embodiments are set forth below with reference to the exemplary drawings. Other features will be apparent from the description, the drawings, and from the claims. It should be understood, however, that even though embodiments are separately described, single features of different embodiments may be combined to further embodiments.
Figure 1 shows a schematic representation of a system comprising a robotic handling device.
Figure 2 shows an exemplary schematic depiction of sample container rack holding sample containers as recognised by the robotic handling device.
Figure 3 shows a flow chart comprising steps of an exemplary method for handling sample containers using a robotic handling device.
Figure 4 shows a swim lane diagram comprising exemplary steps performed by a robotic handling device and a computing device.

### Detailed Description

In the following, a detailed description of examples will be given with reference to the drawings. It should be understood that various modifications to the examples may be made. Unless explicitly indicated otherwise, elements of one example may be combined and used in other examples to form new examples.

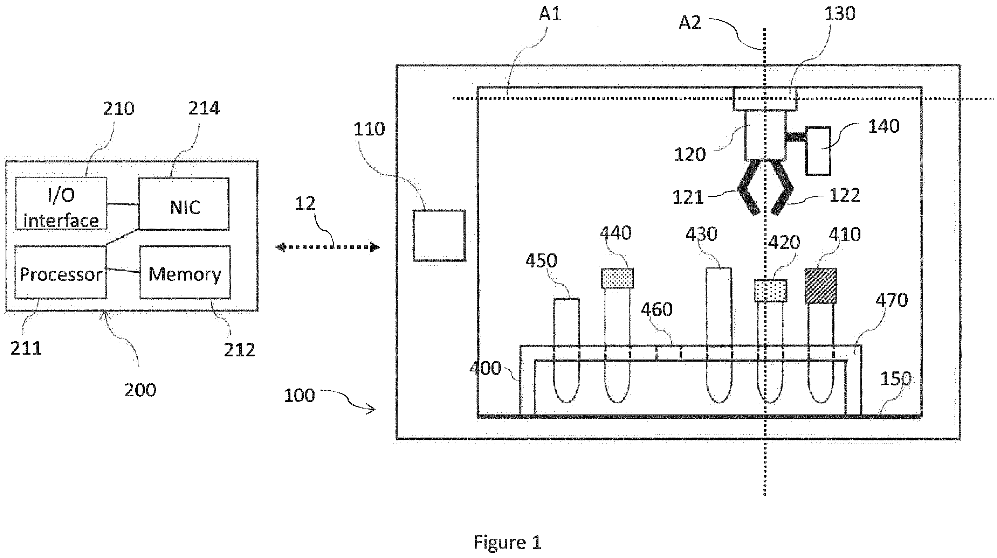

**Figure 1** shows a schematic representation of a system comprising a robotic handling device 100. The robotic handling device 100 comprises a gripper element 120 and a drive mechanism 130 configured to move the gripping element 120 along a vertical axis A2 and a first horizontal axis A1 and a second horizontal axis (not shown), the second horizontal axis being orthogonal to the vertical axis A2 and the fist horizontal axis A1. When brought in the appropriate position by the drive mechanism 130, the gripping element 120 can take tubes from and put tubes into a tube rack 400 positioned below the gripping element 120. Specifically, the gripping element 120 comprises gripping fingers 121, 122 for gripping and releasing tubes.

The rack 400 rests on a holding element 150, e.g. the bottom of a drawer or the deck of a laboratory instrument. The rack 400 is a C-shape bracket having an upper plate and two lateral plates supporting the upper plate. The upper plate 470 of the rack 400 comprises a plurality of upper openings or receptacles configured to receive and hold respective tubes. The rack 400 of Figure 1 may comprise twelve receptacles arranged into two rows and six columns, wherein only one row is shown in Figure 1.

For instance, tubes 410 to 450 are arranged within the first row of rack 400 as shown in Figure 1, while receptacle 460 is empty. More generally, the rack 400 may be in any configuration between full (i.e. all receptacles are occupied by a tube) and empty (i.e. all receptacles are empty). The tubes 410 to 450 arranged within the rack 400 may have different features. For instance, the tubes have different lengths with respect to each other. Furthermore, tubes 430 and 450 are not capped while tubes 410, 420 and 440 are capped, wherein the caps of tubes 410, 420 and 440 are different from each other.

The robotic handling device 100 further an optical camera device and a LIDAR device integrated in one sensing device 140. The sensing device 140 collect sensing data related to the rack 400, specifically to the empty receptacles of the rack 400 and to the occupied receptacles of the rack 400, i.e. to the tubes occupying the receptacles of the rack 400. In particular, the sensing device 140 is positioned above the rack 400, so that the optical camera device takes digital images of the rack 400 from above and the LIDAR device measures distances from its position to the upper plate of the rack 400 and the upper portions of the tubes 410-450 protruding from the upper plate of the rack 400.

Depending on the sensing properties of the sensing device 140, it may collect sensing data about the whole rack 400 at once or step-wise, by scanning the rack 400. The drive mechanism 130 can move the sensing device 140 to a plurality of positions, wherein the sensing device 140 collects sensing data about a different section of the rack 400 at each position of the plurality of positions.

The robotic handling device 100 further comprises a first computing device 110 comprising a first processor (e.g. a CPU, a GPU, or the like), and a first memory. The first computing device 110 also comprises a first Network Interface Controller (NIC) configured to connect the first computing device 110 with one or more networks (e.g. an intranet, the internet, a cellular network, or the like). The first computing device 110 may be in data communication with the sensing device 140 and receives the sensing data from the sensing device 140 and obtains recognition data therefrom. Alternatively, the first computing device 110 may be part of the sensing device 140.

The robotic handling device 100 and in particular its first computing device 110 exchanges data with a second computing device 210. The second computing device 210 comprises a second processor 211 (e.g. a CPU, a GPU, or the like), and a second memory 212. The second memory 212 may comprise a primary memory and a secondary memory (not shown). The second computing device 210 comprises an input output (I/O) interface 210 for communicating with an input/output unit, e.g. in the form of a screen. The second computing device 210 further comprises a second NIC 214 configured to connect the second computing device 210 with one or more networks (e.g. an intranet, the internet, a cellular network, or the like).

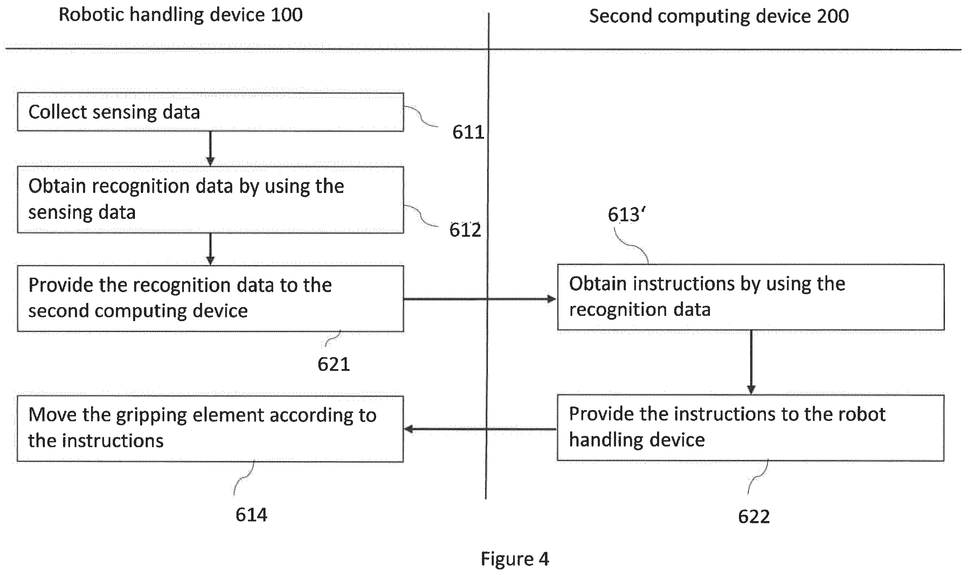

The first computing device 110 and the second computing device 210 may exchange data with one another via the first NIC 114 and the second NIC 214 by using a protocol suite such as TCP or IP, said protocol being schematically represented in Figure 1 by the double-headed dashed line 12. In particular, in some cases (see the description of Figure 4 below), the second computing device 210 may generate instructions for controlling the drive mechanism 130 based on the recognition data obtained by the first computing device 110.

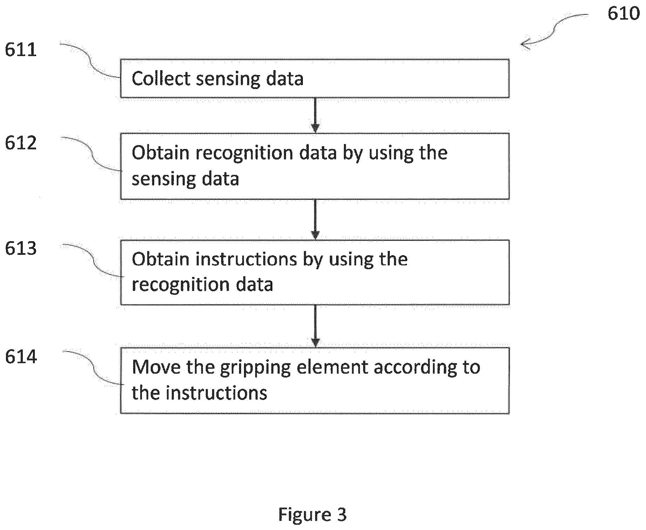

The robotic handling device 100 of Figure 1 handles the tubes according to the method shown in Figure 3 or the method shown in Figure 4. In particular, the robotic handling device 100 can unload tubes from a rack that is at least partially occupied and can load tubes into a rack that is at least partially free.

The method 610 of **Figure 3** comprises collecting sensing data at step 611. The sensing data are collected by the sensing device 140 and comprise one or more colour digital images (or RGB frames) of the rack 400 taken from above the rack and one or more distance heatmaps (or LIDAR frames) of the rack 400 as observed from above.

At step 612 the first computing device 110 obtains recognition data by using the sensing data. In particular, the first computing device 110 may use a machine learning algorithm to generate the recognition data from the sensing data. The machine learning algorithm may provide a recognition function of the objects in the RGB frames and LIDAR frames. The machine learning algorithm may comprise at least one neural network, e.g. a feed-forward neural network. Exemplarily, the neural network may be the "You Look Only Once" (YOLO) object recognition neural network, in particular version 3 of the YOLO object recognition neural network, as described in the paper "YOLOv3:An Incremental Improvement" authored by J. Redmon and A. Farhadi, and published on arXiv as arXiv:1804.02767v1. This paper is hereby incorporated by reference.

In one example, the input of the neural network may be RGBD frames, in which each pixel is associated with values for red, green, blue and distance. An RGBD frame is obtained by merging an RGB frame and a LIDAR frame, thereby obtaining an input comprising four channels (e.g. the channels "R", "G", "B" and the channel comprising the information provided by the LIDAR). For instance, accordingly, the number of channels in the input for the YOLO object recognition neural network may be set to four.

Optionally, before merging, one or more of the following pre-processing steps may be performed:
1. Performing time synchronization for frames.
   For example, this step may be performed if the optical camera device and the LIDAR device take pictures continuously at different rates (e.g. 30 fps vs 25 fps) or at the same rate but not in a synchronized manner. Time synchronization may be achieved by means of interpolation, such as by taking a frame from the camera device and by taking the average of the frames from the LIDAR device that are immediately before and after the camera frame. Alternatively, time synchronization may be achieved by approximation, namely by taking a frame from the camera device and by taking the temporally closest frame from the LIDAR device.
2. Aligning the RBG frame and the LIDAR frame with one another, by using the rotation and the translation connecting the camera reference frame and the LIDAR reference frame. Those rotation and translation may be obtained by using conventional LIDAR-camera calibration procedures
3. Adjusting the scaling of the LIDAR frame and the RBG frame.
   For example, this step may be performed if the neural network requires a specific number of pixels and/or a specific size of the file for the input. Exemplarily, the LIDAR frame and the RGB frame may be scaled to have 416x416 pixels.
4. Performing the normalization for LIDAR and RGB frames.
   For example, the values in the RGB frames may be divided by 256 while the values for the D channel may be divided by 65536, assuming that the distance is represented by an unsigned 16 bit integer, so that the image pixel values for the LIDAR and RGB frames may be scaled to values between 0 and 1.

The neural network may output an output frame comprising a plurality of pixels, which are associated with regions and confidence values for the presence or absence of tubes with certain characteristics within those regions. A pixel region is associated with a set of six numerical values, e.g. (0.95, 0.5, 0.5, 0.2, 0.2, 0). The value 0.95 indicates the confidence level, (0.5, 0.5) is the normalised object position, (0.2, 0.2) are the normalised object dimensions and 0 indicates an empty receptacle. A value of 1 for the latter value indicates a sample container with a cap of a first type, a value of 2 a sample container with a cap of a second type and a value of 3 a sample container with a cap of a third type. The types of caps may be distinguished by one or more of the following features: cap type, shape of the cap, dimension of the cap, colour of the cap (in particular, colour and dimension of the top ring). Finally, a value of 4 for the sixth numerical value may indicate an uncapped tube. Accordingly, for instance, the number of categories of the objects recognised in the output for the YOLO object recognition neural network may be set to five (empty receptacle, capped tube with cap of first type, capped tube with cap of second type, capped tube with cap of third type, uncapped tube).

The training data for the neural network comprise pairs of input frames and output frames. In particular, the training data may comprise the sensing data, i.e. an image and a distance heatmap, and the output, e.g. an output frame, which the MLA shall generate by processing the sensing data. For example, the output frame comprises pixel regions in which an object has been recognised and/or pixel regions in which no object has been recognised. As mentioned above, the latter pixel regions may have no values associated with them, while the former pixel regions may have a set of values associated therewith. The training data may be labelled manually or automatically by using a robotic arm configured to try to grip every position and making pictures that will be labelled according to the result of the robotic arm attempts.

For the exemplary case in which the MLA is the YOLO object recognition neural network, the training process may for instance comprise labelling about 200 input frames from different type of tubes and racks, wherein within each frame around 10-40 objects are marked. The labelled data may be split into two sets according to the ratio 80/20, i.e. 80% for the training phase and 20% for the verification phase. The training may be done for 300 epochs with a batch size set to 2. The standard loss function defined for YOLO v3 as described in "YOLOv3: An Incremental Improvement" by J. Redmon and A. Farhadi, arXiv:1804.02767v1, is used.

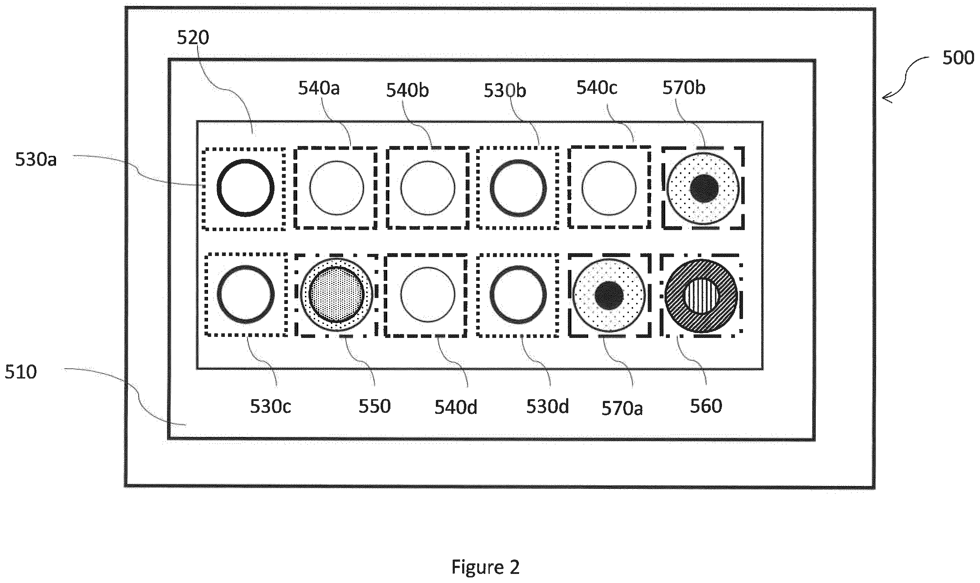

An exemplary schematic output frame is shown in **Figure 2****.** In particular, the output frame has been generated by the neural network by processing the RGB frame taken by the optical camera device 140 and LIDAR frame taken by the LIDAR 140. The output frame 500 comprises a visual representation of pixel regions 530a - 530d, 540a - 540d, 550, 560 and 570a - 570bin which objects (e.g. tubes and empty receptacles) have been recognised. The output frame 500 comprises also a depiction 520 of the upper plate 470 of the rack 400 and a depiction 510 of the holding element 150 on which the rack 400 is held. Furthermore, it has been recognised that regions 540a to 540d depict empty receptacles 460 of the rack 400, regions 530a to 530d depict receptacles occupied by uncapped tubes 430, 450, region 550 depicts a receptacle occupied by a tube 440 capped with a cap of a first type, region 560 depicts a receptacle occupied by a tube 410 capped with a cap of a second type, and regions 570a - 570b depict receptacles occupied by tubes 420 capped with caps of a third type. Exemplarily, a cap of the second type may indicate a STAT sample, i.e. a sample that shall be processed with highest priority. In other words, the cap of the second type indicated that the tube 410 contains a STAT sample.

Step 612 comprises mapping the position of the pixel regions 530a - 530d, 540a - 540d, 550, 560 and 570a - 570b in the digital image to the three-dimensional position of the objects recognised in said regions. In particular, said mapping may be carried out by using the mapping procedure described above. The recognition data comprise information indicative of the three-dimensional positions of the objects recognised in the pixel regions 530a - 530d, 540a - 540d, 550, 560 and 570a - 570b.

After having obtained the recognition data the first computing device 110 obtains instructions for controlling the drive mechanism 130 by using the recognition data (step 613). For example, with reference to the example of Figure 2, if the robotic handling device 100 has to unload the rack 400, the first computing device 110 may generate instructions instructing the drive mechanism 130 to:
- move the gripping element 120 to the three-dimensional position of the tube 410 depicted in the region 560 to grip the tube 410 (since it contains the STAT sample);
- move the gripping element 120 to an unloading location to release the tube 410;
- move the gripping element 120 to the three-dimensional position of the tube 420 depicted in the region 570a to grip the sample tube 420, which is adjacent to the previous three-dimensional position depicted in the region 560.

The instructions may further instruct the drive mechanism to move the gripping element 120 to all positions at which a sample container was recognised. While this illustrative example is for unloading tubes, the same principles apply, *mutatis mutandis,* for loading.

Finally, the method 610 comprises moving, by the drive mechanism 130, the gripping element 120 according to the instructions (step 614).

The method of Figure 3 may be carried out in a slightly different manner involving an interaction between the robotic handling device 100 and the second computing device 200, as shown in **Figure 4****.** Steps 611 and 612 are identical. Once the first computing device 110 has obtained the recognition data, it provides (e.g. sends) the recognition data to the second computing device 200 at step 621. Thus, at step 613', it is the second computing device 200, and not the first computing device 110 as in step 613 of Figure 3, that obtains instructions for controlling the drive mechanism 130 by using the recognition data. The instructions obtained by the second computing device 200 at step 613' are identical to the instructions that are generated at step 613 of the flowchart shown in Figure 3 and are described above.

Afterwards, at step 622, the second computing device 200 provides (e.g. sends) the instructions to the robotic handling device 100. In one example, the second computing device 200 may control the drive mechanism 130 and, thus, directly provide the instructions to the drive mechanism 130. In another example, the second computing device 200 may provide the instructions to the first computing device 110 of the robotic handling device 100, which may control the drive mechanism 130.

The final step 614 of moving, by the drive mechanism 130, the gripping element 120 according to the instructions is also identical to the step 614 shown in Figure 3.

### Examples

Example 1: A robotic handling device for handling sample containers, wherein the sample containers are or are to be arranged within a sample container rack, the robotic handling device comprising:
- a gripping element for gripping and releasing the sample containers;
- a drive mechanism configured to move the gripping element; and
- at least one sensing device connected to the gripping element,

wherein the at least one sensing device is configured to collect sensing data related to the sample container rack, the sensing data comprising optical imaging data and ranging data;
wherein the drive mechanism is configured to move the gripping element based on recognition data related to the sample container rack, the recognition data being obtained from the sensing data.

Example 2: The robotic handling device of example 1, wherein: the at least one sensing device comprises an optical camera device and a rangefinder device.

Example 3: The robotic handling device of example 1 or 2, wherein the sample container rack comprises a plurality of receptacles,
and wherein the recognition data comprise receptacle occupancy information indicative of whether at least a receptacle of the sample container rack is empty or occupied by a sample container.

Example 4: The robotic handling device of example 3, wherein, in case the receptacle is occupied by the sample container, the recognition data further comprise container position information indicative of a position of the sample container.

Example 5: The robotic handling device of example 3 or 4, wherein, in case the receptacle is empty, the recognition data further comprise receptacle position information indicative of a position of the empty receptacle.

Example 6: The robotic handling device of any one of examples 3 to 5, wherein, in case the receptacle is occupied by the sample container, the recognition data further comprise closing information indicative of whether the sample container is closed by a cap or not.

Example 7: The robotic handling device of example 6, wherein, in case the sample container is closed by a cap, the recognition data further comprise cap information indicative of one or more features of the cap.

Example 8: The robotic handling device of any one of the preceding examples further comprising a first computing device, wherein the first computing device is configured to obtain the recognition data from the sensing data, and wherein, optionally, the first computing device is configured to use a machine learning algorithm to obtain the recognition data.

Example 9: The robotic handling device of example 8, wherein the first computing device is configured to obtain the recognition data by using:
rack data, the rack data comprising information indicative of a position of each receptacle of the sample container rack in the sample container rack; and
rack position data, the rack position data comprising information indicative of the position and/or orientation of the sample container rack.

Example 10: The robotic handling device of example 9, wherein the robotic handling device is further configured to read the rack data, the rack data being comprised in an indicium of the sample container rack.

Example11: The robotic handling device of example 8 or 9, wherein the first computing device is configured to obtain the rack position data by using the sensing data.

Example 12: The robotic handling device of any one of examples 8 to 11, wherein the first computing device is configured to obtain the recognition data by using gripper position data, the gripper position data comprising information indicative of a position of the gripper element.

Example 13: A system comprising:
the robotic handling device of any one of examples 8 to 12 and a second computing device, wherein:
the first computing device is configured to provide the recognition data to the second computing device;
the second computing device is configured to generate, based on the recognition data, instructions for moving the gripping element; and
the drive mechanism is configured to move the gripping element according to the instructions.

Example 14: A method for handling sample containers, wherein the sample containers are or are to be arranged within a sample container rack, comprising:
- collecting, by at least one sensing device connected to a gripping element, sensing data related to the sample container rack, the sensing data comprising optical imaging data and ranging data;
- moving, by a drive mechanism configured to move the gripping element, the gripping element based on recognition data related to the sample container rack, wherein the recognition data are obtained from the sensing data.

Example 15: The method of example 14 further comprising obtaining, by a first computing device, the recognition data from the sensing data.

## Claims

1. A robotic handling device (100) for handling sample containers, wherein the sample containers are or are to be arranged within a sample container rack (400) comprising a plurality of receptacles, the robotic handling device (100) comprising:
- a gripping element (120) for gripping and releasing the sample containers;
- a drive mechanism (130) configured to move the gripping element (120); and
- at least one sensing device (140) connected to the gripping element (120) and comprising a stereo camera,
wherein the at least one sensing device (140) is configured to collect sensing data related to the sample container rack (400), the sensing data comprising optical imaging data and ranging data;
wherein the drive mechanism (130) is configured to move the gripping element (120) based on recognition data related to the sample container rack (400), the recognition data being obtained from the sensing data;
wherein the recognition data comprise receptacle occupancy information indicative of whether at least a receptacle of the sample container rack (400) is empty or occupied by a sample container; and
wherein the recognition data is obtained from both optical imaging data and ranging data.

2. The robotic handling device (100) of claim 1, wherein, in case the receptacle is occupied by the sample container, the recognition data further comprise container position information indicative of a position of the sample container.

3. The robotic handling device (100) of claim 1 or 2, wherein, in case the receptacle is empty, the recognition data further comprise receptacle position information indicative of a position of the empty receptacle.

4. The robotic handling device (100) of any one of claims 1 to 3, wherein, in case the receptacle is occupied by the sample container, the recognition data further comprise closing information indicative of whether the sample container is closed by a cap or not.

5. The robotic handling device (100) of claim 4, wherein, in case the sample container is closed by a cap, the recognition data further comprise cap information indicative of one or more features of the cap.

6. The robotic handling device (100) of any one of the preceding claims further comprising a first computing device, wherein the first computing device is configured to obtain the recognition data from the sensing data, and wherein, optionally, the first computing device is configured to use a machine learning algorithm to obtain the recognition data.

7. The robotic handling device (100) of claim 6, wherein the first computing device is configured to obtain the recognition data by using:
rack data, the rack data comprising information indicative of a position of each receptacle of the sample container rack (400) in the sample container rack (400); and
rack position data, the rack position data comprising information indicative of the position and/or orientation of the sample container rack (400).

8. The robotic handling device (100) of claim 7, wherein the robotic handling device (100) is further configured to read the rack data, the rack data being comprised in an indicium of the sample container rack (400).

9. The robotic handling device (100) of claim 6 or 7, wherein the first computing device is configured to obtain the rack position data by using the sensing data.

10. The robotic handling device (100) of any one of claims 6 to 9, wherein the first computing device is configured to obtain the recognition data by using gripper position data, the gripper position data comprising information indicative of a position of the gripping element (120).

11. The robotic handling device (100), wherein the sensing device (140) comprises a plurality of optical camera devices at different positions thus having different perspectives, in particular, wherein each optical camera device is configured to collect the optical imaging data and the plurality of different perspectives in the optical imaging data provides the ranging data.

12. The robotic handling device (100) of claim 11, wherein the ranging data comprises one or more distance measurements between the at least one sensing device (140) and a point of the rack (400), particularly including potential sample containers.

13. A system comprising:
the robotic handling device (100) of any one of claims 6 to 12 and a second computing device, wherein:
the first computing device is configured to provide the recognition data to the second computing device;
the second computing device is configured to generate, based on the recognition data, instructions for moving the gripping element (120); and
the drive mechanism (130) is configured to move the gripping element (120) according to the instructions.

14. A method for handling sample containers, wherein the sample containers are or are to be arranged within a sample container rack (400) comprising a plurality of receptacles, comprising:
- collecting, by at least one sensing device (140) connected to a gripping element (120) and comprising a stereo camera, sensing data related to the sample container rack (400), the sensing data comprising optical imaging data and ranging data;
- moving, by a drive mechanism (130) configured to move the gripping element (120), the gripping element (120) based on recognition data related to the sample container rack (400), wherein the recognition data are obtained from the sensing data,
wherein the recognition data comprise receptacle occupancy information indicative of whether at least a receptacle of the sample container rack (400) is empty or occupied by a sample container; and
wherein the recognition data is obtained from both optical imaging data and ranging data.

15. The method of claim 14 further comprising obtaining, by a first computing device, the recognition data from the sensing data.
